# EUROPEAN PATENT APPLICATION

(11) **EP 4 230 541 A1**
(43) Date of publication of application: **23.08.2023**
(21) Application number: 21819245.8
(22) Date of filing: 11.10.2021
(51) Int. Cl.: B65D 1/20, A47J 31/00, B65D 83/04

(54) **SYSTEMS AND PROCESSES FOR COFFEE DISTRIBUTION WITH REUSABLE LARGE-SIZE CONTAINERS**

(30) Priority: 14.10.2020 PT 2020116843
(71) Applicant: Novadelta - Comércio e Indústria de Cafés, Unipessoal Lda, 1950-041 Lisboa (PT)
(72) Inventor: NABEIRO, Rui Miguel, 7370-112 Campo Maior (PT)
(74) Representative: Ferreira Pinto, Francisca
(86) International application number: PCT/PT2021/050035
(87) International publication number: WO 2022/081032

(57) **Abstract**

The present invention refers to systems and processes for distributing coffee to consumption locations (A) where beverage preparation apparatuses, including espresso coffee and similar, are operated. In particular, the systems include a reusable distribution container (3) adapted for collection of coffee beans or substance derived thereof.

The distribution containers (3; 3A, 3B) can be of one or two types, and can be transported by a transport vehicle (1) that presents displacement means (2) and can discharge coffee beans in sealed manner relative to the ambient atmosphere, whereby any of the types of distribution container (3; 3A, 3B) can be associated with respective displacement means (30), and at least one type of supply container (3B) can be arranged in discharge position indoors, remotely relative to the beverage preparation apparatuses, and be operated in discharge by discharge means (7).

## Description

### Field of Invention

The present invention refers to the field of systems and processes for the distribution of coffee beans or substances derived therefrom, to a plurality of consumption locations where beverage preparation apparatus, such as espresso coffee and others, are operated on the basis of coffee beans, coffee, or substances derived from it.

### Background of the Invention

The distribution of coffee beans to consumption locations where beverage preparation apparatuses are operated on the basis of roasted and ground coffee beans is known. Such apparatuses are operated on the basis of supply containers that supply the said roasted and ground coffee bean, either manually, for example through discharge to filter-holder apparatuses, or automatically, to beverage extraction apparatuses. Such supply containers are often provided associated with at least one roasting means and a grinding means.

Examples of coffee beans distribution containers up to such supply containers are known.

Document US 7,074,443 B2 discloses a package for containing roasted and ground coffee beans under atmospheric pressure.

Documents WO 2009/224653 A1 and WO 2018/106631 A1 disclose packaging systems for providing roast and ground coffee beans. In the first case, it is a package with a circular cross section provided in a rigid material, while in the second case, it is a package with a rectangular cross section and provided in a flexible material.

Document US 6,244,459 B1 relates to a container for bulk materials, including for hazardous materials, including intermediary containers and portable tanks. The container is provided rigid and in polymeric materials. The technical characteristics associated with the container and production method thereof are different from those disclosed by the present invention.

In any case, it is also known that the supply of coffee bean, being a granular type medium, is usually distributed to consumption locations in bag-type packages, which in the case of roasted coffee beans are usually sealed in inert atmospheres of in order to minimize the degradation of the properties of the coffee bean. Furthermore, for reasons of ease of handling the coffee beans bags are usually provided relatively small, for example 1 kg in weight, and are grouped in cartons which are in turn arranged on pallets.

Furthermore, it is essential to ensure a barrier to the transmission of ultraviolet radiation and the transfer of water vapor and oxygen, whereby usually said coffee beans bags are provided in relatively expensive materials, for example composite materials, and difficult to dispose of or recycling. This requirement requires the use of materials that are relatively expensive and whose disposal entails significant environmental costs.

In addition to transport or distribution containers of coffee beans, and as mentioned above, containers for supplying coffee beans to roasting and/or grinding means associated with the beverage preparation apparatus at consumption locations are known. This type of supply containers is usually configured so that can be releasably retained in said roasting and/or grinding means. In particular, these supply containers have relatively small dimensions and the supply of coffee beans takes place in a gravitational way. Examples of supply containers adapted so that can collect coffee beans and operate with roasting means and/or grinding means at consumption locations are disclosed by EP 2344013 B1, EP 2653082 B1.

The state of the technique includes various solutions relating to systems and processes for distributing coffee beans to a plurality of consumption locations. The still common solution is to use transport vehicles that transport a plurality of containers of coffee beans.

### General Description of the Invention

The objective of the present invention is to provide systems and processes for coffee distribution from at least one supply location and to a plurality of consumption locations geographically distant from each other, said processes and systems being more efficient in terms of use of energy and materials, with a substantial reduction in the consumption of packaging materials and transport energy, in particular per unit weight of coffee beans, associated with distribution. This reduction in packaging material is relevant because the transport of coffee beans, or substance derived therefrom, requires materials with barrier properties to water vapour or oxygen transfer and to the transmission of ultraviolet rays, and these are materials generally difficult to recycle or eliminate by composting, and are relatively expensive materials.

A related objective of the present invention is to provide reusable distribution containers adapted for collecting and storing coffee beans or substance derived thereof, and that reduce the quantity of packaging material used, simplify the handling operations of discharge of coffee beans, as well as improve the operation of such containers at consumption locations.

This objective is accomplished according to the present invention by means of a distribution system according to claim 1.

In particular, this objective is solved by means of a system that includes a single type of reusable distribution container, or at least two types of reusable distribution containers of different dimensions, adapted so that can be operated for transfer of coffee beans or substance derived thereof, between an ex situ supply location and in situ consumption locations, including so that can be operated in a discharge position into beverage preparation means at the consumption location, said discharge position being remote relative to these means.

The system may include a first type of distribution containers: transport containers configured with bigger cargo volume and configured so that can only be operated outdoors.

The system can include only a second type of distribution container: supply containers configured so that can be operated indoors.

The distribution containers are configured so that can be reused for multiple loads of coffee beans, or substance derived therefrom.

The distribution containers may present a collection volume greater than 0.005 m³, preferentially greater than 0.01 m³, and preferentially smaller than 30 m³, preferentially smaller than 20 m3.

The distribution containers can be adapted so that can discharge coffee beans *in situ* from a position in the transport vehicle, for example to supply containers at the consumption location, or they can be moved to a position outside the transport vehicle so that can discharge coffee beans at the consumption location, optionally only at a certain consumption location for each load.

The distribution containers can discharge coffee beans *in situ* in sealed manner relative to the ambient atmosphere into a supply container with a smaller collection volume, whereby both of said types of containers are configured as reusable.

The *in situ* discharge of coffee beans from the distribution containers can be carried out by means of a conduct connection sealed relative to the ambient atmosphere, so that the coffee beans are not exposed to the outside environment on the way to the beverage preparation device.

According to the present invention, it is particularly advantageous when the system includes only a distribution container adapted so that can be operated *in situ* in a discharge position indoors of the consumption location into at least one of: roasting, grinding means, beverage preparation device, or supply containers directly coupled in feeding connection to at least one of these, remotely relative to these.

The supply containers are containers of smaller dimensions than the transport containers, and are adapted so that can be operatively connected by means of flow connections, preferentially of the flexible drain duct type.

The supply containers can have a collection volume of between 0.005 and 0.1 m³, preferentially of between 0.01 and 0.05 m³.

The supply containers may present at least one characteristic dimension greater than 20 cm and smaller than 1.5 m, preferentially greater than 30 cm and smaller than 90 cm.

The supply containers can be refilled at the *ex situ* supply location and operated in discharge at an *in situ* consumption location, in particular by connection with discharge means adapted for supplying the beverage preparation apparatuses.

In particular, the supply containers may be operated in cycles that include loading at the supply location and transport to a consumption location, where they may be operated to discharge the entire respective cargo at said consumption location *in situ,* and transported back to the ex situ supply site for recharging.

The discharge connection of the supply containers downstream thereof can be carried out in a conduct connection in a sealed manner with respect to the ambient atmosphere.

In particular, the present invention discloses a system that can include a transport vehicle with propulsion and locomotion means, adapted so that can transport at least one reusable distribution container that can store coffee beans or substance derived thereof, provide its transport to, as well as discharge at a plurality of consumption locations geographically distanced from each other, and that can be returned multiple times to a factory-side where can be refilled.

The coffee beans to be transported can be green coffee beans or roasted coffee beans. In particular, the coffee beans collected in a continuous volume of the transport container can be green coffee beans or roasted coffee beans, under conditions of inert gas atmosphere and/or overpressure, adapted so that can preserve the organoleptic properties thereof.

The consumption locations are locations where at least one, possibly a plurality of beverage preparation apparatuses are located, operable with roast and ground coffee bean, or substance derived therefrom, such as for example coffee beverage concentrate.

Examples of consumption locations include locations of public consumption, such as cafes and restaurants, which include one or more beverage preparation systems, and places of private consumption.

In these consumption locations there is at least one apparatus for preparing beverages based on coffee beans or a substance derived therefrom, such as espresso coffee and the like.

The beverage preparation apparatuses may include a beverage preparation machine adapted so that can perform extraction cycles of an individual portion of the roast and ground coffee beans.

The beverage preparation apparatuses may further comprise at least one of: coffee beans roasting means and coffee beans grinding means, provided in operative flow-feeding connection of coffee beans or ground coffee beans to beverage preparation apparatuses that discharge beverage into a drinking recipient. The beverage apparatuses may further comprise means for supplying pressurized and heated fluid, in flow connection with said beverage preparation apparatuses.

The coffee beans roasting means can be associated with a container that can be provided in flow connection upstream of the coffee beans grinding means.

The coffee beans grinding means can be remotely arranged with respect to the beverage preparation apparatuses, so that the supply of ground coffee beans to the beverage preparation apparatuses is done manually. Examples of this type of beverage preparation apparatus, including for example espresso-type coffee preparation machines and similar beverages, operated on the basis of coffee beans grinders which can be operated with filter holders also operable as beverage preparation apparatuses, are known in the state of the art, so a more detailed description of them is waived.

Alternatively, the coffee beans grinding means can be associated in direct flow connection with the beverage preparation apparatuses so that the supply of ground coffee beans to the latter is by conduct-type connection, or similar.

A related objective of the present invention is to provide a process for distributing coffee to a plurality of consumption locations geographically distanced from each other, in conditions of better storage conservation of the quality of the coffee beans, and of better efficiency of operation at the consumption locations.

This objective is solved according to the present invention by means of a distribution process according to claim 11, whereby the secondary claims disclose preferred embodiments.

Said process is particularly adapted for operating a system according to claims 1 to 10.

In particular, the aforementioned objective is solved by means of a process that comprises a plurality of distribution cycles between an ex *situ* supply location and *in situ* consumption locations geographically distanced from each other.

Each cycle of the process can include the transport of a distribution container, by a transport vehicle with displacement means, to at least one, preferentially to a plurality of successive consumption locations, discharge of at least part of the load of the distribution container at each destination consumption location, and transport of the distribution container back to a supply location for refilling thereof.

The process can include ex *situ* refilling the distribution container, *in situ* discharge of at least part of the load from the distribution container, and *in situ* supply of the coffee beans to at least one of: roasting means, grinding means of coffee beans, beverage preparation device and feeding container thereof, whereby in all said steps, respective storage periods and transfers between containers, the coffee beans are preferentially kept under sealed conditions to the ambient atmosphere.

The process can include the transport of distribution containers indoors of consumption locations by means of displacement means associated individually with each distribution container.

The process can include the attribution of a unique identification, for example a serial number, to each distribution container, preferentially associated with information means arranged on the container envelope and configured so that can be apprehended automatically.

### Description of the Drawings

The invention will be explained in greater detail below on the basis of preferred embodiments and the attached drawings.

The drawings show, in simplified schematic representations, embodiments of systems and processes according to the present invention:
- Figure 1:: a first embodiment of a transport vehicle (1) and a distribution container (3);
- Figure 2:: a second embodiment of a transport vehicle (1) and distribution container (3);
- Figure 3:: diagram of a first embodiment of distribution at a consumption location (A);
- Figure 4:: diagram of a second embodiment of distribution at a consumption location(A);
- Figure 5:: diagram of a third embodiment of distribution at a consumption location (A);
- Figure 6:: diagram of a fourth embodiment of distribution at a consumption location (A);
- Figure 7:: an embodiment of a coffee distribution process;
- Figure 8:: an embodiment of a coffee distribution process;
- Figure 9:: an embodiment of a coffee distribution process;
- Figure 10:: an embodiment of a coffee distribution process;
- Figure 11:: a third embodiment of a transport vehicle (1) and a distribution container (3);
- Figure 12:: a fourth embodiment of a transport vehicle (1) and a distribution container (3);
- Figure 13:: schematic diagram of a third embodiment of distribution at a consumption location(A);
- Figure 14:: schematic diagram of a fourth embodiment of distribution at a consumption location (A);

- Figure 15:: top view of a form of arrangement of distribution containers (3), in particular supply container (3B), in a transport vehicle (1) ;
- Figure 16:: side elevation view of a form of arrangement of distribution containers (3), in particular supply container (3B), in a transport vehicle (1) ;
- Figure 17:: an embodiment of a transport container (3A) in a system according to the present invention;
- Figure 18:: an embodiment of the general configuration of a transport container (3A) or a supply container (3B) container in a system according to the present invention;
- Figure 19:: a fourth embodiment of a coffee distribution process in accordance with the present invention;
- Figure 20:: a fifth embodiment of a coffee distribution process in accordance with the present invention;
- Figure 21:: diagram of data in systems and processes according to the present invention.

### Description of preferred embodiments of the invention

The present invention shall be described based upon embodiments that include consumption locations (A) geographically distant from each other, and in which beverage preparation apparatus operate with roasted and ground coffee beans, for example for preparing espresso coffee or other coffee-based beverages.

In this case, it is necessary to supply coffee beans for roasting and grinding in situ at the consumption location, or coffee beans previously roasted *ex situ,* and for at least to be ground *in situ* at the consumption location.

Examples of this type of consumption locations (A) include different places of public use, such as cafes, restaurants and the like.

The aforementioned consumption locations (A) are geographically distant from each other.

The scope of the invention can include other substances derived from coffee beans, such as coffee beverage concentrates.

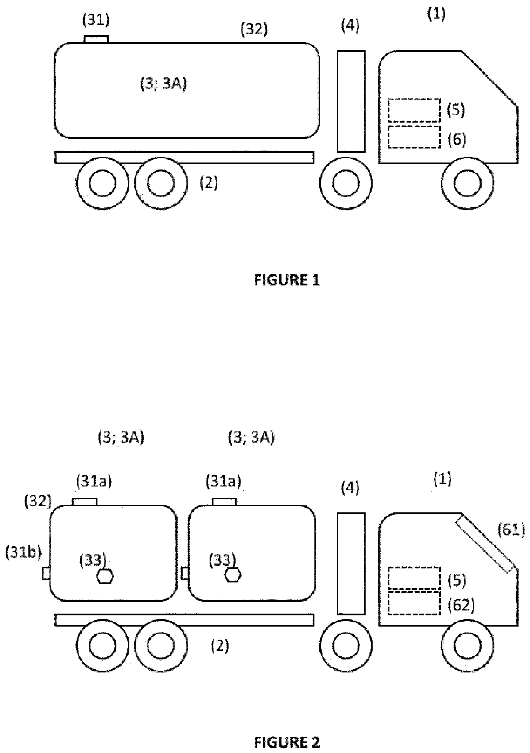

Figure 1 represents embodiments of a transport vehicle (1), in this case a lorry-type vehicle, which includes displacement means (2), that is, means of locomotion and propulsion that can be an engine operatively connected to a train of wheels, and adapted so that can carry a first type of distribution container (3; 3A) for collecting coffee beans and that presents at least one dimension similar to at least one corresponding dimension of the loading part of the transport vehicle (1).

In particular, a first type of distribution container (3; 3A) can present at least one dimension similar to the corresponding dimension of the trailer of a transport vehicle (1), for example the length may be 20 or 40 feet, or other standard length measurement.

The distribution container (3) is advantageously configured as a container for a plurality of distribution paths including successive cycles of operation between a supply location (B), where loading and reloading of the distribution container (3) with coffee beans, and at least one, or a plurality of consumption locations (A) geographically distant from each other, in which coffee beans are discharged.

The distribution container (3) can present an opening (31) in an envelope (32) preferentially provided in a rigid material and which encloses a collection volume and has at least one characteristic dimension, in particular width, similar to a characteristic dimension of the transport vehicle (1). Furthermore, it can also present a second similar dimension, namely the length, as in the case of the embodiment shown in Drawing 1. Said opening (31) can be used for loading and discharging.

Alternatively, as in the case shown in Figure 2, the distribution containers (3) can present a loading opening (31a) and at least one discharge opening (31b) adapted so that can be closed in a sealed manner. In particular, at least one of, preferentially both, said loading and discharge openings (31b) can present a perimeter region that is adapted, for example with a collar-like collar of rigid material, so that can be detachably engaged with a first connection end, for example a conduit of circular section, for the outflow of coffee beans or derived substance.

The distribution container (3) can present an envelope (32) with a general shell-like shape, for example of a cylindrical or parallelepiped type, that encloses a collection volume adapted for collecting and storing coffee beans. Said material envelope can be adapted so that can provide barrier to ultraviolet transmission and water vapor transfer and oxygen transfer to the interior.

The distribution container (3) can have at least one loading opening (31a) adapted so that can be connected, preferentially sealingly, to loading means (not shown), preferentially of the flexible conduit type or the like, namely at a supply location (B), for refilling a load of coffee beans, and further presenting at least one discharge opening (31b) which can be provided in a different relative position in the envelope (32) and adapted so that can also be connected, preferentially sealingly, with discharge means (4), preferentially of the flexible conduit type or the like, for discharging coffee beans.

In the case of the embodiment shown in Figure 2, the loading opening (31a) is provided on an upwards-oriented side and the discharge opening (31b) can be provided in a region close to the base wall, or in the base wall, of the distribution container (3).

The transport vehicle (1) may be associated with discharge means (4) that may include a discharge conduit and flow impulse means adapted so that can provide a discharge impulse, for example compressed air, or vacuum, to actuate the coffee beans discharge flow.

The transport vehicle (1) can further present data means (5) adapted so that can regulate the operation of at least the discharge means (4), in particular on the basis of the acquisition and processing of data associated with the distribution containers (3), optionally also data associated with the displacement means (2), and operating in data connection with remote data means (20), exchanging data with these by means of wireless communications, as will be explained below. It is advantageous when the data means (5) include georeferencing means, for example of the GPS type, or the like.

The transport vehicle (1) can also present energy generation means (61), for example of the photovoltaic type, and energy storage means (62), for example of the electric battery type, adapted so that can supply electric energy, or another form of final energy, at least to the discharge means (4), optionally also to the displacement means (2).

The data means (5) and power means (6) can be adapted so that can provide propulsion, guidance and data communication autonomy to the transport vehicle (1), so that the distribution process to various consumption locations (A) can be carried out automatically/autonomous from direct human intervention.

In particular, it is advantageous when the transport vehicle (1) comprises propulsion means, including actuated by electric energy or by hydrogen, and further presents temporary energy storage means, including electric energy and/or hydrogen, adapted so that can provide said means of propulsion and, further, discharge means (4) of coffee beans or of distribution container (3).

According to an advantageous aspect, the distribution container (3) can present information means (33). The information means (33) can include information regarding the contents, origin and/or destination of the container, and counterfeiting prevention measures. In particular, the information means (33) can be provided so that can be read automatically, for example in a form of color code, bar code, QR code, or other coding type.

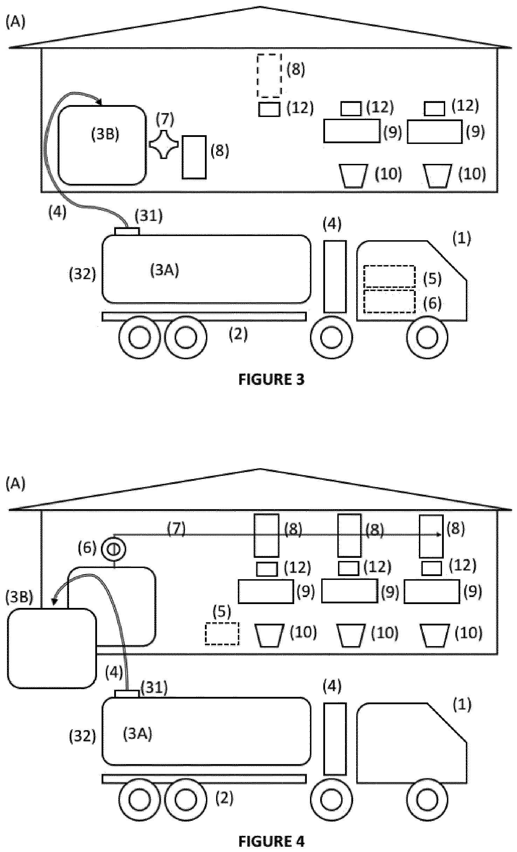

As shown in Figures 3 to 6, the transport vehicle (1) and distribution container (3) are adapted so that can be operated for discharging coffee beans at a plurality of consumption locations (A), thereby providing a determined quantity of coffee beans to each of these, and after discharging the load from the distribution containers (3), to later return the distribution containers (3) to a supply location (B) for refilling them.

At each consumption location (A) at least one beverage preparation system is operated that may include various coffee beans processing means, such as roasting means (11) and grinding means (12), in order to supply roasted and ground coffee beans. Furthermore, each consumption location (A) includes at least one beverage preparation apparatus, including at least one beverage preparation device (9) that can be operated with roasted and ground coffee beans, or substance derived therefrom. The beverage preparation devices (9) can form part of beverage preparation apparatuses that include means for providing a flow of water heated up to at least 80°C, preferentially at least 90°C, and at a flow pressure of at least 5 bar, preferentially at least 10 bar. The beverage preparation devices (9) can be configured so that can discharge into drinking recipients (10) according to the direction of gravity or in an opposite direction to it.

In the case of the embodiments shown in Figures 3 to 6, the distribution process can include discharging coffee beans from a first type of distribution container (3) in position on-board the transport vehicle (1), to a second type of distribution container (3) provided indoors or outdoors.

The system according to the present invention comprises a distribution container (3; 3A, 3B) with at least one continuous collection volume adapted so that can collect at least 0.005 m³, preferentially at least 0.5 m³.

The distribution containers (3) can be provided with a metallic envelope, or in a composite material, preferentially compostable, preferentially with at least part of the interior surface with "food grade" finish, and so that an inert atmosphere can be generated and maintained inside.

The distribution containers (3) can be configured with a general shell-like shape and a cylindrical, frusto-conical, or parallelepiped-like shape, for example a cube, with a base region of at least 0.5 m², preferentially with at least 1 m².

According to an aspect of the present invention, the system can include a first type of distribution container (3) adapted as a transport container (3; 3A) and having a larger collection volume than a second type of distribution container (3; 3B) adapted as a supply container (3; 3B).

A difference between transport container (3A) and supply container (3B) can be the size of the total collection volume and the size of the respective loading opening (31a), which can be larger in the case of the former than in the case of the second.

Furthermore, the supply container (3B) can be different from the transport container (3A) in at least one of: general configuration, construction material, support structure.

In particular, the transport container (3A) can present characteristic dimensions whereby one thereof can present an order of magnitude larger than at least one other, where at least two can be similar, where the smallest can be larger than 1 m, preferentially greater than 2 m.

The transport container (3A) can be configured so that confines a total collection volume of at least 5 m³, preferentially at least 10 m³, whereby it is preferred when said transport container (3A) has outer dimensions contained in a reference volume and similar to a shipping container of standard dimensions, including of 20 feet or 40 feet.

The distribution supply container (3B) may have characteristic dimensions smaller than those of the transport container (3A), at least two of which may be similar, the smallest of which may be greater than 0.4 m, of a is preferentially greater than 0.5, and the largest may be less than 1.8 m, preferentially less than 1.2 m.

The distribution supply container (3B) can present, when fully loaded with coffee beans, a weight of at least 10 kg, preferentially at least 25 kg, particularly preferentially at least 40 kg, and at most 250 kg, preferentially at most 130 kg, particularly preferentially at most 75 kg.

The discharge and loading openings (31a, 31b) of the distribution containers (3; 3A; 3B) can present a characteristic dimension (D) of between 30 and 1000 mm, preferentially between 50 and 300 mm.

The transport container (3A) can be adapted so that can be operated at least outdoors. The supply container (3B) can be configured and adapted so that can be operated at least indoors.

At least the supply container (3B) can present at least one of: a first dimension (X₁), for example height, and a second dimension (X₂), for example width, greater than 0.3 m, preferentially greater than 0.4 m, and less than 1.5 m, preferentially less than 0.8 m.

The discharge of coffee beans can be carried out via discharge means (4), in particular a discharge flow conduct, preferentially via a flexible pipe between an opening (31) of the distribution container (3) and an opening (31) of a supply container (3B). The discharge of coffee beans can be advantageously carried out in an environment-sealed manner.

The supply container (3B) can be provided as an in-door storage reservoir (Figure 3), or arranged outdoors and in connection with the interior (Figure 4), or so that can be carried indoors of the consumption location (A).

In the case of the embodiment shown in Figure 3, the coffee beans, for example roasted coffee beans, can then be manually discharged, from time to time and as required, from the supply container (3B) via respective discharge means (7). The discharge means (7) are configured so that can be releasably engaged with the opening (31) and thereby provide an optional discharge of coffee beans.

The discharge means (7) can in this case be configured in the form of a valve or discharge tap, manually operable, and the discharge can be made to supply means (8) which can then also be manually associated directly in a flow connection with grinding means (12) of coffee beans.

In this example, the consumption location (A) can include coffee beans grinding machines having said supply means (8) and grinding means (12), and that can supply portions of roast and ground coffee beans, as well as coffee brewing apparatus of the filter holder type. These apparatuses will be known to the person skilled in the art, so that further description is waived.

In the case of the example shown in Figure 4, the discharge of coffee beans from the supply container (3B) can be done through discharge means (7) configured as a flow conduit providing connection between an opening (31) and at least one, optionally a plurality of, supply means (8) operable in connection with, and so that can supply, grinding means (12) and beverage preparation device (9).

The discharge means (7) can be associated with power means (6) adapted to provide energy for displacement of the flow, such as compressed air, or to generate a suction force, or the like.

It is advantageous when this flow connection can be established sealed to the ambient atmosphere, so that the coffee beans are kept protected from exposure to it all along the way from the supply location (B) until being supplied to a beverage preparation device (9).

It is further advantageous when the discharge of coffee beans can be done without manual intervention, preferentially automatically regulated by data means (5) associated with the beverage preparation system.

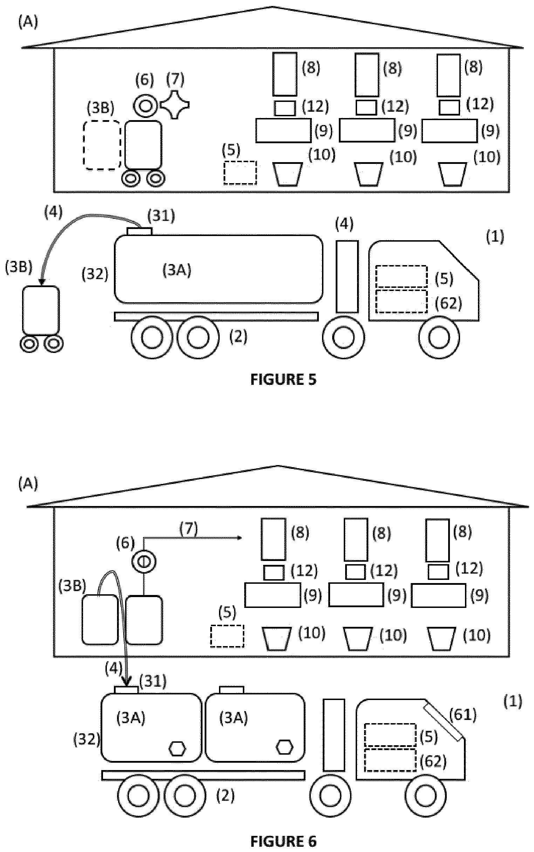

In the case of the example shown in Figure 5, the supply containers (3B) are associated with displacement means (30) so that can be moved between outdoors and indoors of the consumption location (A).

Furthermore, the supply containers (3B) can be associated with discharge means (7) of the valve or discharge tap type, but additionally associated with power means (6), so that the discharge can be controlled automatically, preferentially by functional connection with the data means (5) that regulate the operation of the beverage preparation system.

In the case of Figure 6, the possibility is shown that at least part of the supply containers (3B), or containers, can be used for collecting the coffee grounds resulting from the beverage preparation process based on ground coffee beans, and that said coffee grounds can be loaded into transport containers (3A) associated with the transport vehicle (1), so that can be transported to a destination, for example to the supply location (B) .

It is thus advantageously provided an efficient solution for the distribution of coffee beans and the collection of residues resulting from its use, with potential for recovery of said residues.

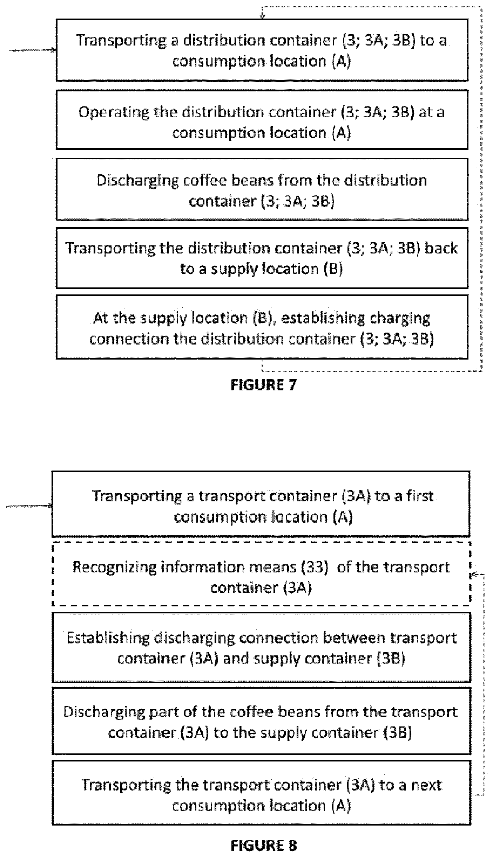

As shown in the flowchart of Figure 7, the process according to the present invention can thus include successive cycles of loading a load of coffee beans into a distribution container (3) at a supply location (B), distributing this load of coffee beans to at least one consumption location (A), where at least part of the load of coffee beans is discharged, and then returning that distribution container (3) to the supply location (B) for refilling and starting a new distribution cycle.

Each cycle can be started with loading, or reloading, a certain amount of coffee beans at a supply location (B) and may include discharging part of this quantity at each of a plurality of consumption locations (A), or at at least part of each of these consumption locations (A).

Each distribution cycle can include different consumption locations (A), both in terms of number and in terms of quantity of coffee beans discharged in each, and in terms of the geographic distribution of consumption locations (A).

Cycles may include use of at least two types of distribution containers (3A, 3B), including transporting transport containers (3A) to a single consumption location (A), or to a plurality of successive consumption locations (A), as well as establishing a discharging connection between the transport container (3A) that is not operable indoors and a supply container (3B) that is operable indoors, and the discharging of a part of the volume of coffee beans at the consumption location (A).

Alternatively, the transport container (3A) can be offloaded outdoors of the consumption location (A) and operated at the consumption location until all its cargo is used, being returned to the supply location (B) when empty.

The supply container (3B) can be adapted so that can be moved between outdoors and indoors of the consumption location (A) .

Furthermore, as depicted in the flowchart of Figure 8, at each consumption location (A), the distribution process may include recognition of the information means (33) associated with the transport container (3A) by apprehension means in functional connection with the data means (5) of the transport vehicle (1), after which a discharging connection between a transport container (3A) and a supply container (3B) may be established to provide the discharge of coffee beans from the former to the latter.

This discharge connection can be realized by means of a discharge conduit, preferentially with the contribution of a flow displacement energy form, for example compressed air or under-pressure, preferentially generated by the power means (6) associated to the transport vehicle.

Alternatively, the process may include only opening the discharge opening (31a), without establishing a physical conductive coffee beans connection, so as to provide coffee beans discharge, for example only by means of the force of gravity, to a supply container (3B), possibly in a manner that is not air sealed.

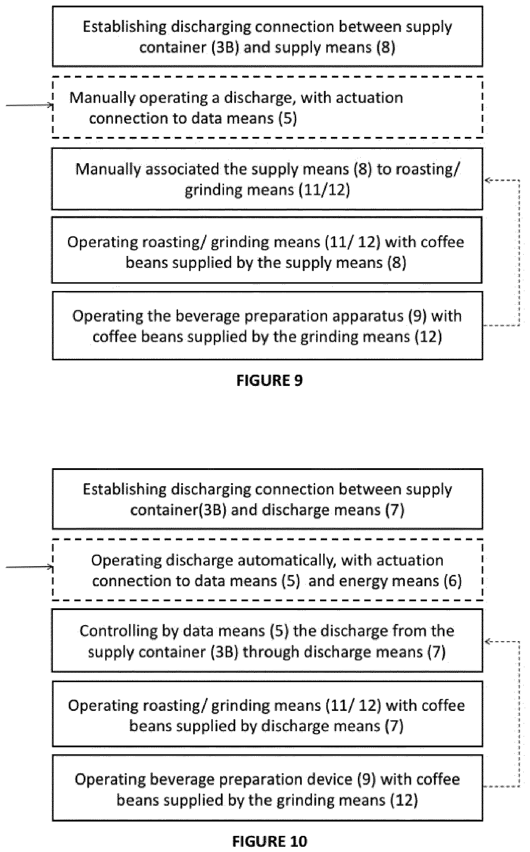

In addition, as shown in Figures 9 and 10, at each consumption location (A), the process may include providing from time to time a certain quantity of coffee beans from at least one of: transport container (3A) and supply container (3B) to at least one of: discharge means (7) and supply means (8) associated in flow connection to processing means of coffee beans upstream of extraction devices (9), said processing means of coffee beans providing at least one of roasting means (11) and grinding means (12) of the coffee beans.

The process may include apprehending information means (33) from the supply container (3B) prior to establishing the discharge connection.

The discharging can be carried out manually to the supply means (8), or automatically, preferentially controlled by the data means (5), to the discharge means (7).

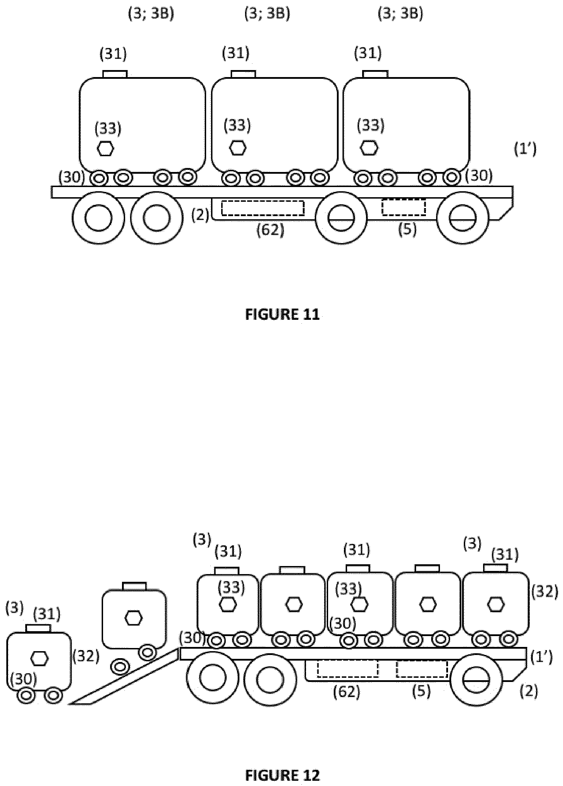

Figures 11 and 12 represent another embodiment of the system according to the present invention. In particular, in this case, the distribution containers (3; 3B) are provided so that can be offloaded at a consumption location (A) and operated there by means of direct or indirect connection to a beverage preparation system.

The transport vehicle (1') can carry a plurality of distribution containers (3A, 3B) adapted so that can be moved on-board and off-board. The discharge means (4) can be adapted so that can move the distribution containers (3) on-board of the transport vehicle (1').

According to a particularly preferred embodiment, the distribution containers (3), in particular of at least one type of supply container (3B), can have displacement means (30) so that can be moved off-board and on-board the transport vehicle (1'), as well as to the interior of the consumption location (A) .

In these cases, the transport vehicle (1') is configured so that can collect distribution containers (3) over more than 90% of the length, preferentially over the entire length of the transport vehicle (1'), and this does not include space for the driver, possibly also not for the crew. The transport vehicle (1') can also be adapted so that can be driven automatically, without human intervention, on the paths between at least one supply location (B) and each of the consumption locations (A).

According to one aspect of the present invention, the coffee beans distribution process, in particular the steps of transporting the distribution container (3), discharging the coffee beans at each consumption location (A), optionally by offloading the distribution containers (3; 3B), advantageously configured as supply containers (3B), can thus be carried out automatically, without direct human intervention, and under the supervision of remote data means (20).

According to one aspect of the present invention, the system can include only one type of distribution container (3), in particular of a transport container (3A), configured so that can be transported to a consumption location (A), and be offloaded and operated at the consumption location (A) as storage and supply of coffee beans, including at least one of: roasting means (11) and grinding means (12).

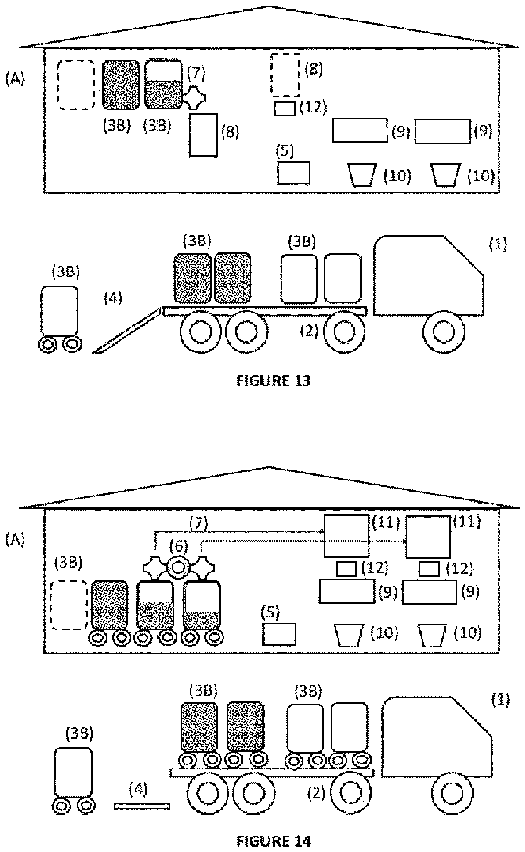

Figures 13 and 14 represent embodiments according to the present invention in which the system includes only one type of supply containers (3B) and the coffee distribution process includes offloading a certain number of supply containers (3B) at each consumption location (A). The transport vehicle (1) can then also be loaded with supply containers (3B) which, however, are empty, so that can be returned to a supply location (B) for refilling. Optionally, the supply container (3B) is adapted so that can supply coffee beans to supply means (8) that present a collection volume of coffee beans that is smaller than the supply container (3B) and that can be associated in direct power supply connection, for example actuated by at least one of: discharge means (4) and gravity force action, with at least one of said roasting and grinding means (11, 12).

Alternatively, the discharge means (4) can be associated with the consumption location (A).

According to one aspect of the present invention, both this and all other transfer operations of coffee from a first to a second container can be carried out by means of a connection sealed to the outside atmosphere, so that the coffee is never directly exposed to the latter.

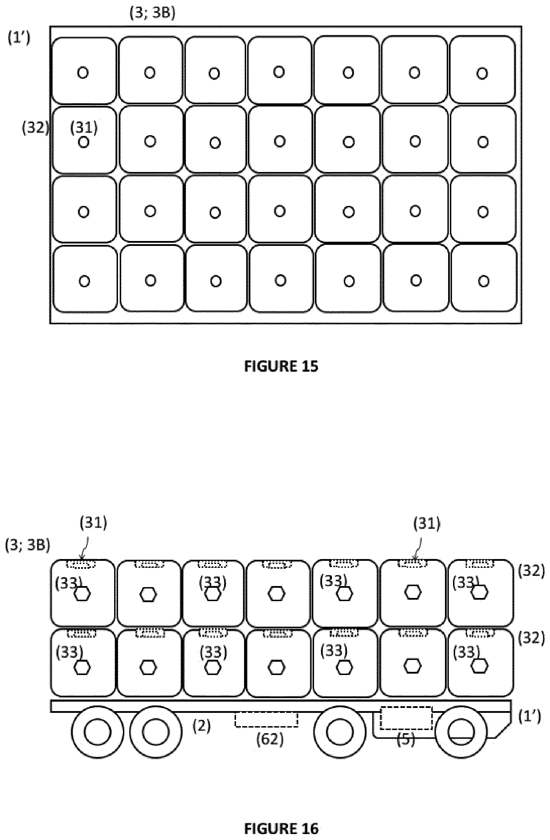

Figures 15 and 16 represent preferred configurations of the envelope (32) of distribution containers (3), in particular of supply containers (3B), that provide a maximal use of the available transport volume in a respective transport vehicle (1) .

As shown, the supply containers (3B) can be configured so that can be stacked, at least two, one on top of the other, and arranged next to each other, so as to minimize gaps between them.

In particular, the supply containers (3B) can be configured so that can be arranged in a three-dimensional matrix, with their own structural support, so as to occupy at least 80%, preferentially at least 90% of the cargo space of a transport vehicle (1).

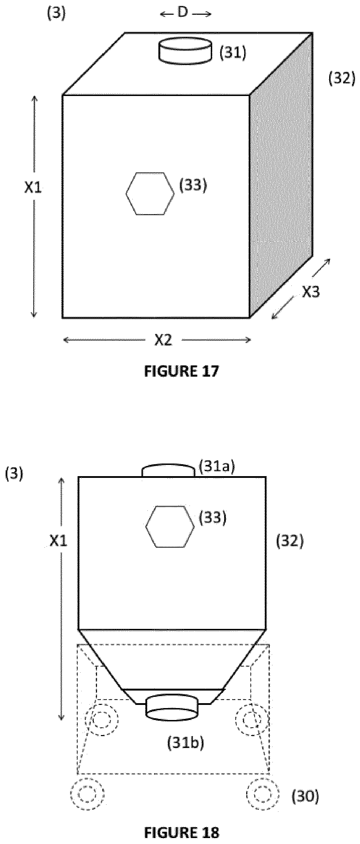

Figures 17 and 18 represent two embodiments of distribution containers (3; 3A, 3B) adapted so that can be used multiple times, in multiple distribution cycles of coffee beans between supply location (B) and consumption locations (A).

At least the supply container (3B) can present similar second and third dimensions (X₂, X₃), transverse to the direction of the gravity force.

The supply container (3B) can present, when fully loaded with coffee beans, a weight of at least 10 kg, preferentially at least 25 kg, particularly preferentially at least 40 kg, and at most 250 kg, preferentially at most 130 kg, particularly preferentially at most 75 kg.

As mentioned above, the distribution container (3; 3A, 3B) can advantageously present a loading opening (31a) and a discharge opening (31b) that are different and/or provided at different locations, with a semi-rigid perimeter region or rigid, preferentially adapted so that can be engaged by a valve-type apparatus or a discharge tap and/or by a conduit-type connection for discharge flow, preferentially in a sealed manner to the ambient atmosphere.

The supply container (3B) can also present a loading opening (31a) adapted so that can provide sealing and resealing thereof in an air sealed manner, for example by means of a closure cap-like element, and that can provide establishment of discharge connection with a transport container (3A). The loading opening (31a) of the supply container (3B) is advantageously similar to the discharge opening (31b) of the transport container (3A), in particular it presents a similar characteristic dimension (D), for example diameter.

The loading and discharge openings (31a, 31b) can present a characteristic dimension (D) comprised between 30 and 1000 mm, preferentially between 500 and 300 mm.

In particular, it is preferred when at least one of: the transport container (3A) and the supply container (3B) present an envelope with a wall thickness thereof which is at least 0.5 mm, preferentially at least minus 1 mm, and at most 5 mm, preferentially at most 3 mm.

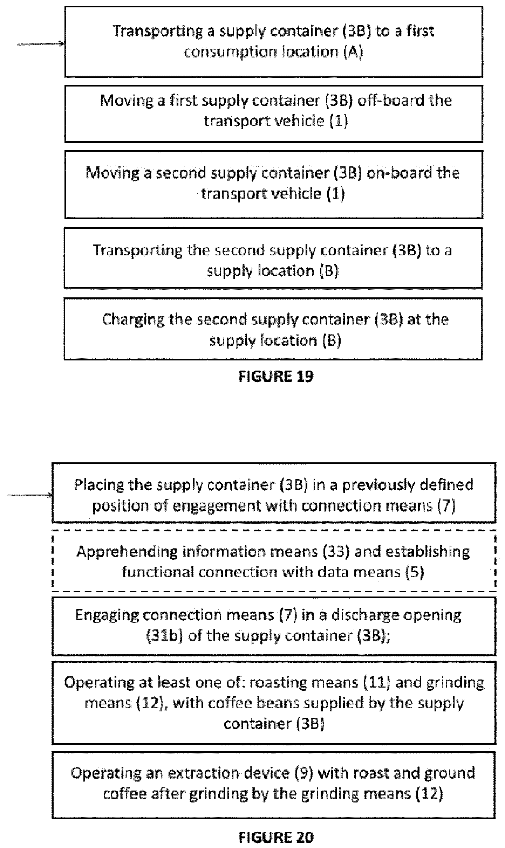

In the case of an alternative process shown in Figures 19 and 20, the system only includes one type of supply containers (3B), which can be initially loaded with coffee beans at a supply location (B) and transported to a certain consumption location (A) in which they are offloaded from a transport vehicle (1).

The distribution process may include moving part of the distributing containers (3) on-board, by discharge means (4) associated with the transport vehicle (1), by displacement means (30) associated with the supply containers (3B), and according to the needs of each consumption location (A). A given number (n) of supply containers (3B) can be supplied at each consumption location (A).

During each cycle of use at the consumption location (A), part (m) of the supply containers (3B) can be operated in grain discharge, and the other part (n-m) can be stored.

In this case, it is also advantageous to collect in the transport vehicle (1) at least one distribution container (3) that was already at the location in question and which, in the meantime, is already empty.

After moving the distribution containers (3) out of the transport vehicle (1), they can be parked outdoors and/or indoors of the consumption location.

As should be readily understood by the reader, the process can also include transport containers (3A) of larger dimensions and that can be operated as supply containers (3B).

The process includes placing a supply container (3B) in a predefined operative position indoors of the consumption location(A).

In particular, it is in that operative position, preferentially only in that operative position, that a discharge opening (31) can be engaged with discharge means (7), for example in the form of a valve or discharge tap, or in the form of a flow discharge conduct.

It is further preferred when at least one of: placing in operative position, engaging with discharge means (7), and establishing functional connection with data means (5), can be preceded and conditioned on the apprehension of the information means (33) by second apprehension means (52) automatically or semi-automatically.

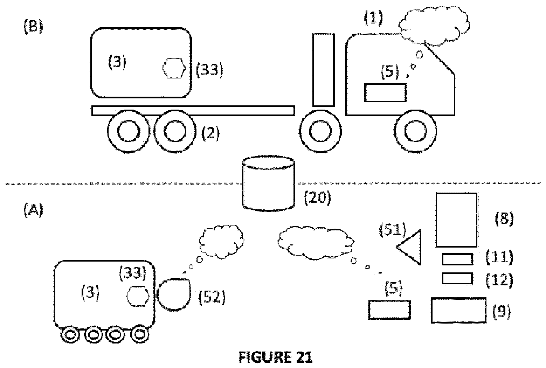

According to the present invention, and as schematically represented in Figure 21, the transport vehicle (1) and the supply location (B) can present data means (5) adapted so that can operate in a functional connection of data exchange with remote data means (20), associated for example with a supply location (B), including data relating to the location of certain distribution containers (3).

The beverage preparation system can further include first grasping means (51) provided so that can apprehend operating parameters associated with at least one of the devices, including at least one of: roasting means (11), grinding means (12) and beverage preparation device (9), or associated fluid delivery devices.

As mentioned above, the distribution containers (3) may present information means (33) associated with the envelope (32) and in the form of alphanumeric or coded information relating to the contents of the container, type of container and/or unique identification of the container, for example serial number, or similar, origin and/or destination, or counterfeiting prevention measures.

According to another embodiment, the information means (33) are provided so that can be read by second apprehension means (52) functionally connected to data means (5) that regulate the operation of the beverage preparation system, whereby the discharge of coffee beans from the distribution container (3) can be regulated by said data means (5) according with the data apprehended by the second apprehension means (52).

It is particularly advantageous when the operating parameters include at least one parameter relating to the operated amount of coffee beans and to the start of a coffee extraction cycle in a beverage preparation device (9).

According to a particularly preferred aspect of the present invention, the distribution containers (3) can be referenced individually, preferentially through information means (33) associated with each one thereof.

The distribution process can thus include the georeferencing of each distribution container (3), uniquely identified throughout the entire distribution process, in particular including along the shipment thereof to a consumption location (A) where the coffee beans are discharged, and along the return to a supply location (B) for refilling. In addition, it can also include the record of the period of time it remains at a certain consumption location (A).

At any given time, it can be determined which distribution containers (3) are where, including en route to which, in which and returning from which consumption location (A), or which supply location (B). An operation history of each distributing container (3) can be generated.

The distribution process can also optionally include the automatic association of a certain georeference, or set of georeferences, to a certain consumption location (A), as well as the automatic association of a certain distribution container (3) to a consumption location (A) for operation only on this one.

The process may also include the automatic generation of estimates of future occurrences, namely based on data provided to the remote data means (20) by the data means (5), including estimated time of arrival of distribution containers (3A) to each supply location (B), as well as future demand estimates, including time estimation of at least a first, preferentially also a second shipment of distribution containers (3A) to a given consumption location (A), and the automatic generation of optimal circulation paths for transport vehicles (1).

## Claims

1. System for distributing coffee from supply locations (B) to consumption locations (A) where a beverage preparation apparatus is operated, the system comprising at least one type of distribution containers (3; 3A, 3B) adapted for storage and discharge of coffee beans, or substance derived therefrom, and reusable,
**characterized**
**in that** the distribution containers (3; 3A, 3B) include supply containers (3B) adapted so that can be refilled and so that can be operated in discharge indoors of consumption locations (A), in a discharge position remote relative to a beverage preparation device.

2. System according to claim 1, **characterized**
**in that** the distribution containers (3; 3A, 3B) present an opening (31) that presents a perimeter region in a rigid or semi-rigid material, and present an envelope (32) that presents a collection volume of at least 0,01 m³ and a construction material that can support a weight of at least 10 kg, preferentially at least 15 kg, particularly preferentially at least 30 kg.

3. System according to claim 1 or 2, **characterized in that** the distribution containers (3; 3A, 3B) correspond to at least one of:
- a transport container (3A) adapted so that can be refilled at a supply location (B) and transported in a full condition to consumption locations (A) and back to a supply location (B) in an empty condition, and being further adapted so that can discharge from on-board of a transport vehicle (1), for example outside the consumption location (A) ;
- a supply container (3B) adapted so that can be refilled in at least one of: supply (B) and consumption location (A), and discharged from position inside the consumption location (A), and
whereby the transport container (3A) presents an envelope (32) with a collection volume bigger than the collection volume of the envelope (32) of the supply container (3B), whereby it is preferred when the transport container (3A) presents a container envelope (32) with a collection volume that is at least five times bigger, preferentially at least eight times bigger, particularly preferentially at least fifteen times bigger than the collection volume of the container envelope (32) of the supply container (3B).

4. System according to claims 1 to 3, **characterized in that** the distribution containers (3; 3A, 3B) correspond to at least one of:
- a transport container (3A) with a collection volume bigger than 0,5 m³, preferentially bigger than 1 m³, and that can support a weight of at least 500 kg, preferentially of at least 700 kg, and preferentially at most 5 tons, particularly preferentially at most 4 tons,
- a supply container (3B) with a collection volume bigger than 0,01 m³, preferentially bigger than 0,02 m³, and that can support a weight of at least 10 kg, preferentially of at least 20 kg, and preferentially at most 100 kg, particularly preferentially at most 80 kg.

5. System according to any of claims 1 to 4, **characterized in that** the distribution containers (3; 3A, 3B) present an opening (31) adapted so that can be engaged by discharge means (4, 7) including of the flow discharge conduct type, of tap or flow discharge valve type, or similar, whereby the discharge means (4, 7) are preferentially configured so as to provide remote operative connection, including in direct manner, such as for example by means of flow discharge conducts, or in indirect manner, such as for example by means of devices of the type tap or discharge valve and transfer recipients, with beverage preparation apparatuses operative at the consumption locations (A).

6. System according to any of claims 1 to 5, **characterized in that** the distribution containers (3; 3A, 3B) present a loading opening (31a) and a discharge opening (31b), whereby the loading opening (31a) preferentially presents a characteristic dimension (D) bigger than the characteristic dimension (D) of the discharge opening (31b), whereby at least one of, preferentially all, said container openings (31a, 31b), preferentially present a perimeter region that configures a rim-like shape or similar, and whereby it is preferred when the loading opening (31a) is provided on the face of envelope (32) and/or in a face that is directly opposite to the face of envelope (32) where there is provided the discharge opening (31b).

7. System according to any of claims 1 to 6, **characterized in that** the distribution containers (3) include at least one type of transport container (3A) adapted so that can be placed in flow discharge connection, preferentially by means of a flexible conduct connection, at least with one type of supply container (3B), and thereby discharge a quantity of coffee beans, or substance derived thereof, into the supply container (3B), whereby the transport container (3A) is preferentially not adapted so that can discharge coffee beans or substance derived thereof, directly to roasting and/or grinding means (11, 12), or to a beverage preparation device (9).

8. System according to any of claims 1 to 7, **characterized in that** the distribution containers (3; 3A, 3B) include at least one type of supply container (3B) adapted so that can supply coffee beans or substance derived thereof, in remote manner to feeding means of a beverage preparation device (9) operable in cycles based upon feeding of a quantity of roast and ground coffee beans and a quantity of pressurized and heated flow, so that roast and ground coffee beans can be fed manually or automatically to a beverage preparation device (9) and discharge therefrom, for example to a drinking recipient (10) .

9. System according to any of claims 1 to 8, **characterized in that** the distribution containers (3; 3A, 3B) include at least one type of supply container (3B) adapted so that can supply coffee beans or substance derived thereof, to at least one of:
- to feeding means (8) presenting a collection volume smaller than the supply container (3B), and adapted so that can be operatively connected directly to at least one of: roasting means (11) and grinding means (12) of coffee beans, and
- to at least one of: roasting means (11) and grinding means (12) of coffee beans,
whereby at least the supply to feeding means (8) and placement thereof in operative position associated with a beverage preparation device can be carried out manually, and the supply to at least one of: roasting and grinding means (11, 12), can be made automatically, including by means of a flow conduct connection.

10. System according to any of claims 1 to 9, **characterized in that** at least one type of distribution containers (3; 3A, 3B) presents at least one rigid or semi-rigid part of envelope (32), for example in a metallic material or in a composite material, and
**in that** at least one type of distribution containers (3; 3A, 3B) presents a loading opening (31a) and a discharge opening (31b) adapted so that can engage remotely by means of conduct connection, preferentially provided removable, with a downstream container and/or device, in sealed manner relative to the ambient air.

11. Process for distributing coffee to geographically distanced consumption location (A), by means of reusable distribution containers (3; 3A, 3B), and comprising successive distribution cycles of a load of coffee beans or substance derived thereof, each cycle including the following steps, in particular successive steps, at a consumption location (A):
- disposing a distribution container (3) in remote discharge position relative to beverage preparation apparatuses;
- providing connection of an opening (31) of the distribution container (3) to discharge means (7);
- operating the distribution container (3) in discharge;
- transporting the distribution container (3) to a supply location (B) *ex situ,* for refilling thereof.

12. Process according to claim 11, **characterized in that** at each consumption location (A) further includes the following steps:
- providing functional connection of at least one of: discharge means (7) and energy means (6), to data means (5) associated with beverage preparation apparatuses;
- apprehending information means (33) associated to and that identify the distribution container (3) in unique manner, in particular by second data means (52) associated with the data means (5);
- communicating the unique identification of the distribution container (3) to remote data means (20);
- operating the distribution container (3) in discharge;
- supply by the discharge means (7) at least one of: feeding means (8), roasting means (11) and grinding means (12) at the consumption location (A);
- supplying beverage preparation devices (9), preferentially in measure quantities corresponding to individual portions, for example of 4 to 12 g, preferentially of 5 to 10 g, of roast and ground coffee beans,
whereby the loading, the transport and the discharge of coffee beans are always carried out in sealed conditions thereof to the exterior atmosphere.

13. Process according to claims 11 or 12, **characterized in that** further includes the following steps:
- providing actuated or automatic closure of the opening (31) of the distribution container (3) in sealed manner to the exterior atmosphere after loading thereof at the supply location (B);
- transporting the distribution container (3) in the transport vehicle (1) to at least a first consumption location (A);
- providing actuated or automatic open of the opening (31) of the distribution container (3);
- operating the distribution container (3) in discharge in connection with discharge means (7);
- providing actuated or automatic closure of the opening (31) of the distribution container (3) in sealed manner to the exterior atmosphere after discharge.

14. Process according to claims 11 to 13, **characterized in that** further includes the following steps at the consumption location (A), in particular sequentially:
- providing a transport container (3A) and a supply container (3B),
- operating distribution containers (3) by means of a direct connection, for example flow conduct, between transport container (3A), for example on-board of a transport vehicle (1), and supply container (3B), off-board the transport vehicle (1);
- operating the supply container (3B) in discharge indoors of the consumption location (A) and remotely relative to a beverage preparation apparatus;
- optionally, moving the supply container (3B);
- operating the supply container (3B) for refilling thereof at the consumption location (A), optionally outdoors.

15. Process according to claims 11 to 14,
**characterized**
**in that**, in at least part of the consumption locations (A), can further include at least one of the following steps:
- moving a supply container (3B) out of the transport vehicle (1);
- optionally, associating displacement means (30) to the supply container (3B);
- moving the supply container (3B) indoors of the consumption location (A), in particular to a discharge position where connection can be established with discharge means (7);
- operating the supply container (3B) in discharge by the discharge means (7), including in operative connection to energy means (6) associated with the discharge means (7), or only by gravity discharge;
- optionally, after the distribution container (3) is empty, loading the distribution container (3) with coffee residues resulting from the extraction of roast and ground coffee beans;
- moving the supply container (3B) on-board of a transport vehicle (1);
- transporting at least the supply container (3B) back to the supply location (B).

16. Process according to claims 11 to 15, **characterized in that** the operation of the distribution container (3A in discharge includes at least one of the following steps:
- engaging the discharge means (7) with an opening (31) of the supply container (3B) in a discharge position remote relative to the beverage preparation apparatus;
- actuation of energy means (6) associated with the discharge means (7);
- establishing functional connection between discharge means (7) and data means (5) associated with beverage preparation apparatuses;
- actuation of the discharge means (7) and/or of the energy means (6) manually or automatically according to inputs from the data means (5);
- regulating the discharge by the data means (5) according to apprehended data, in particular by first apprehension means (51), relating to the operation of at least one of: roasting means (11), grinding means (12) and beverage preparation device (9);
- discharging according to at least one of: continuously, in previously determined portions, in portions determined by the data means (5);
- apprehending data relative to the quantity discharge from the supply container (3B), and processing these data so as to anticipate the empty condition of the supply container (3B) .

17. Process according to claims 11 to 16, **characterized in that** further includes the following steps, at the consumption locations (A):
- establishing a functional connection between data means (5) associated with beverage preparation apparatuses, and remote data means (20);
- apprehending information means (33) associated in unique manner to a distribution container (3; 3, 3B) before starting the operation thereof in discharge;
- exchanging data associated with at least one of: roasting means (11), grinding means (12), beverage preparation devices (9) apprehended by apprehension means (51) by the data means (20) with remote data means (20).

18. Process according to claims 11 to 17, **characterized in that** the distribution container (3) can be operated in discharge if verified at least one of:
- verification of information means (33) including unique identification of the distribution container (3),
- reception of an instruction transmitted from remote data means (20),
in particular, in functional connection with data means (5) associated with beverage preparation apparatuses at the consumption location (A).
